# EUROPÄISCHE PATENTSCHRIFT

(11) **EP 1 731 360 B1**
(45) Veröffentlichungstag und Bekanntmachung des Hinweises auf die Patenterteilung: **21.05.2008**
(21) Anmeldenummer: 06005139.8
(22) Anmeldetag: 14.03.2006
(51) Int. Cl.: B60N 3/02

(54) **Handgriff für ein Kraftfahrzeug**
Handgrip for an automotive vehicle
Poignée pour un véhicule automobile

(30) Priorität: 10.06.2005 DE 102005026836
(43) Veröffentlichungstag der Anmeldung: 13.12.2006
(73) Patentinhaber: Dr. Ing. h.c. F. Porsche Aktiengesellschaft, 71287 Weissach (DE)
(72) Erfinder: Pandura, Michael, 74189 Weinsberg (DE)

(56) Entgegenhaltungen:
- DE-U1- 7 623 712
- DE-U1- 8 706 310
- FR-A- 1 225 785
- FR-A- 1 562 374
- US-A- 3 977 054

## Beschreibung

Die Erfindung bezieht sich auf einen Haltegriff für ein Kraftfahrzeug nach dem Oberbegriff des Anspruchs 1.

Aus der FR-A-1 562 374 ist ein Haltegriff bekannt, in den ein versteifender Kern eingebettet ist. Des weiteren ist aus der DE 76 23 712 U ein Griff aus zwei zusammensetzbaren Schalenkörpern bekannt, die mittels an der Fügefläche angeordneten druckknopfartig ineinander einrastenden Vorsprüngen und Vertiefungen miteinander verbunden sind. Ferner ist aus der DE 87 06 310 U1 ein Dach-Haltegriff aus zwei zusammensetzbaren Schalen bekannt, wobei die eine Schale an einer Verbindungskante einen Haken umfasst, der in einen Schlitz an der gegenüberstehenden Verbindungskante der weiteren Schale einsteckbar ist. Aus der FR -A-1 225 785 ist ein Haltegriff bekannt geworden, welcher zwei ineinander liegende Schalen umfasst, wobei in der inneren Schale eine Stange angeordnet ist, welche endseitig Gewindeabschnitte für Befestigungsmuttern aufweist. Die innere Schale ist fast vollständig von einer äußeren Schale umgeben.

Aufgabe der Erfindung ist es, einen Haltegriff für ein Kraftfahrzeug zu schaffen, der einfach herzustellen bzw. zusammensetzbar ist und stabil ausgeführt ist und Befestigungsmöglichkeiten an einem Fahrzeugbauteil beispielsweise an einem Mitteltunnel des Fahrzeugaufbaus aufweist.

Diese Aufgabe wird erfindungsgemäß durch die Merkmale des Anspruchs 1 gelöst. Weitere vorteilhafte Merkmale beinhalten die Unteransprüche.

Die mit dem aus zwei Kunststoffschalen gebildeten Haltegriff erzielten Vorteile bestehen hauptsächlich darin, dass ein eingesetzter metallischer Kern oder ein Kern aus Kunststoffmaterial einen Stützträger bildet, welcher dem Griff eine optimale Stabilität verleiht und ein Verbiegen bei Belastung verhindert sowie einfach befestigbar ist.

Dies wird nach der Erfindung im wesentlichen dadurch erzielt, indem zwischen den beiden halbrundförmig ausgebildeten Griffschalen aus Kunststoff ein beispielsweise metallischer Stützträger angeordnet ist. Dieser ist im Querschnitt aus einem Doppel-T-Profil bestehend und ist mit einem aus den Griffschalen herausragenden Verbindungselement eckigen Querschnitts mit Befestigungsbohrungen versehen. An seinem weiteren freien Ende ist ein innerhalb der Griffschalen angeordnetes angeformtes hülsenartiges weiteres Verbindungselement vorgesehen, das mit einer Gewindebohrung für ein Schraubmittel zur Befestigung am Fahrzeug versehen ist.

Vorzugsweise ist der aus einem Doppel-T-Profil bestehende Stützträger mit seinen Flanschen den Verbindungskanten der Griffschalen zugerichtet und ein Steg des Doppel-T-Profils ist in einer gemeinsamen Ebene mit den Verbindungskanten verlaufend und die Innenflächen der Griffschalen stützen sich an Stirnkanten der Flansche ab. Hierdurch wird zum einen der Zusammenbau der beiden Griffschalen vereinfacht und zum anderen erfolgt über den durchgehenden Stützträger mit endseitigen Befestigungsmöglichkeiten eine stabile Anbindung an die Fahrzeugstruktur, in diesem Fall an einen Mitteltunnel des Fahrzeugs.

Des weiteren ist nach der Erfindung zur einfachen Verbindung des Stützträgers mit einer Griffschale vorgesehen, dass an einer Innenfläche einer Griffschale mindestens ein Schweißdom oder eine Verrastung angeordnet ist, auf dem über eine Heißnietung der Stützträger festgesetzt wird. Hierdurch kann der Stützträger in einfacher Weise mit der einen Griffschale fest verbunden werden, so dass keine Relativverschiebung zwischen Stützträger und Griffschalen erfolgen kann. Zur gegenseitigen genauen Fixierung der Griffschalen zueinander, weist die eine Griffschale nach der Erfindung an der Innenfläche einer Griffschale mindestens eine Zentrierbuchse auf, in die ein Zentrierstift der weiteren Griffschale zur Ausrichtung der beiden Griffschalen zueinander einsteckbar ist.

Die Verbindung des Haltegriffs erfolgt nach der Erfindung derart, dass das hülsenartige Verbindungselement des Stützträgers den Raum zwischen den beiden Griffschalen ausfüllend angeordnet ist und ein Einsatzteil mit einer Gewindebohrung zwischen Stegen des Verbindungselements gehalten wird. Des weiteren ist vorgesehen, dass das herausragende Verbindungselement des Stützträgers mindestens eine durchgehende Bohrung für eine Befestigungsschraube aufweist, welche quer zum Haltegriff in Einbauposition verlaufen und das Verbindungselement sowie Schrauben über eine an die Griffschale anschließende Abdeckkappe verdeckt sind. Durch diese Ausbildung der beiden freien Enden des Stützträgers mit Verbindungselementen sind einfach herzustellende Befestigungen möglich sowie auf den Haltegriff einwirkende maximale Kräfte aufnehmbar, ohne dass der Haltegriff sich von der Fahrzeugstruktur bei Belastung lösen kann.

Ein Ausführungsbeispiel der Erfindung ist in der Zeichnung dargestellt und wird im folgenden näher beschrieben.

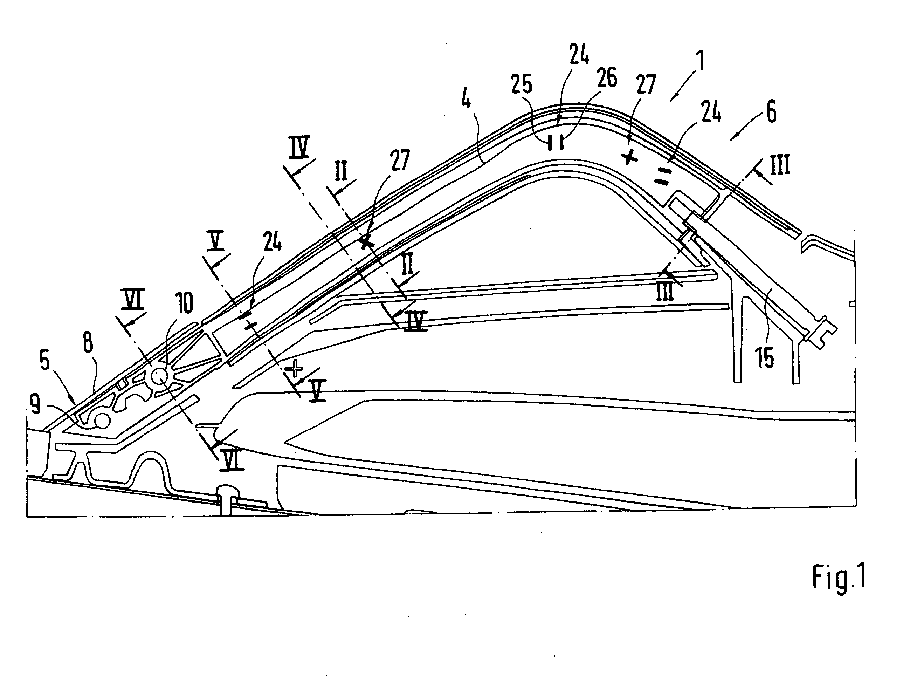

Es zeigen
- Fig. 1: eine Ansicht auf eine Griffschale mit eingelegtem Stützträger,
- Fig. 2: einen Schnitt nach der Linie II-II der Fig. 1 durch den Haltegriff im Bereich eines Zentrierstiftes,
- Fig. 3: einen Schnitt nach der Linie III-III der Fig. 1 durch den Haltegriff im Bereich eines endseitigen Verbindungselements,
- Fig. 4: einen Schnitt nach der Linie IV-IV der Fig. 1 durch die Griffschale und den Stützträger,
- Fig. 5: einen Schnitt nach der Linie V-V der Fig. 1 durch den Haltegriff im Bereich einer Heiß-Verbindungsstelle des Stützträgers,

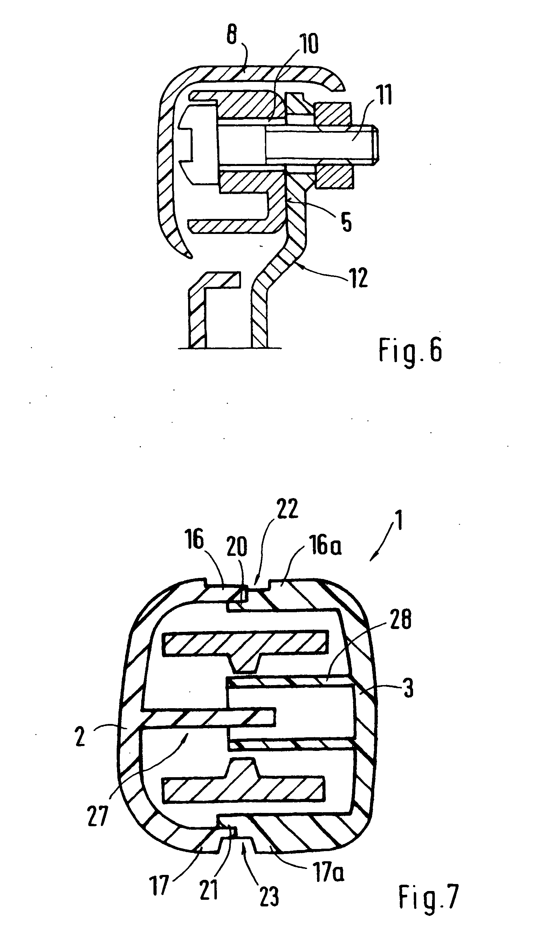

- Fig. 6: einen Schnitt nach der Linie VI-VI der Fig. 1 durch den Haltegriff im Bereich einer endseitigen Verbindung des Stützträgers mit dem Fahrzeug, und
- Fig. 7: eine vergrößerte Darstellung der Verbindungskanten der Griffschalen mit Vertiefungen.

Der Haltegriff 1 umfasst zwei beispielsweise über eine Klebung oder Verrastung miteinander verbundene halbrundförmige Griffschalen 2, 3. Innerhalb dieser Griffschalen 2, 3 ist ein aus einem im Querschnitt als Doppel-T-Profil bestehender Stützträger 4 eingebettet angeordnet, der jeweils endseitig Verbindungselemente 5, 6 zur Befestigung mit der Fahrzeugstruktur aufweist.

Die Verbindungselemente 5, 6 sind einstückig mit dem Stützträger 4 ausgeführt, wobei das eine Verbindungselement 5 aus den Griffschalen 2, 3 freiliegend herausgeführt ist und von einer Schale 8 abgedeckt wird. Dieses Verbindungselement 5 ist im Querschnitt beispielsweise viereckförmig ausgeführt und weist zum Haltegriff 1 mindestens zwei quer verlaufende Bohrungen 9, 10 auf, die die Befestigungsschrauben 11 aufnehmen, welche mit der Fahrzeugstruktur 12 verbindbar sind.

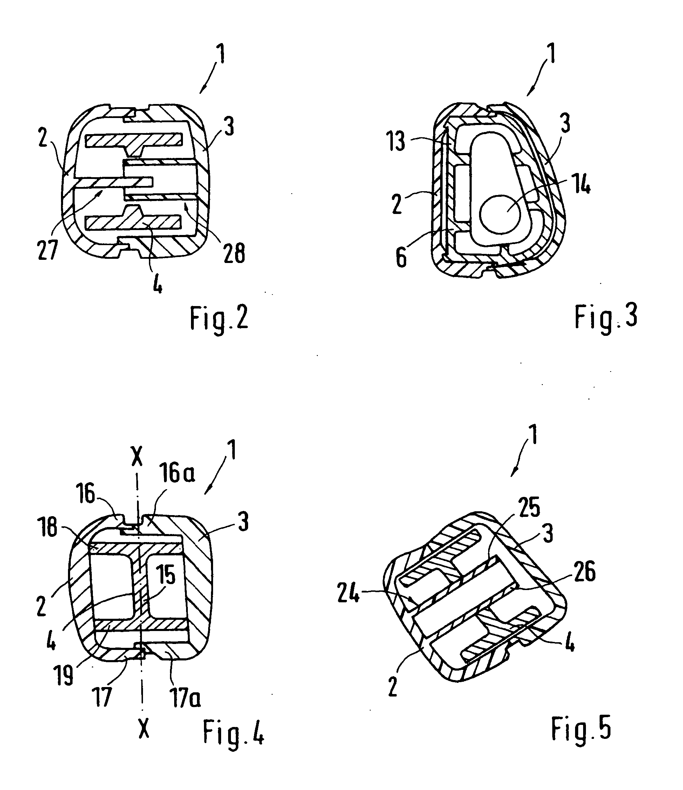

Das weitere Verbindungselement 6 besteht aus einem hülsenförmigen Aufnahmeelement 13, das in die beiden Griffschalen 2, 3 eingebettet angeordnet ist. Im Verbindungselement 6 ist eine Aufnahmebohrung 14 (Fig. 3) für eine Befestigungsschraube (15) angeordnet, welche eine feste Verbindung zur Fahrzeugstruktur herstellt.

Das Profil des Stützträgers 4 liegt mit seinem Steg 15 in einer gemeinsamen Ebene X-X mit zusammentreffenden Verbindungskanten 16, 16a und an Stirnkanten der Flansche 18, 19 des Profils stützen sich die Griffschalen 2, 3 ab.

Die Verbindungskanten 16, 16a und 17, 17a der Griffschalen 2, 3 sind überlappend zueinander angeordnet, wobei die Verbindungskanten 16a, 17a der Griffschale 3 eine Absetzung 20, 21 aufweisen, in welche die gegenüberstehenden Verbindungskanten 16, 17 eingelegt sind. Im Verbindungsbereich der Kanten 16, 16a und 17, 17a bildet sich jeweils eine Vertiefung 22, 23, in welche eine Naht einer Umhüllung aus Leder oder einem anderen Material für den Handgriff 1 liegt. Es kann sich bei dem anderen Material um einen Stoff, Folie, Lederimitat oder dgl. handeln.

Der Stützträger 4 ist an einer Griffschale 2, 3 mittels eines Schweißdomes 24 (Fig. 5) festsetzbar, der hierzu heißgenietet wird. Der Schweißdom 24 umfasst beispielsweise zwei beabstandete Rippen 25 und 26.

Zur Fixierung der beiden Griffschalen 2, 3 zueinander sind im Querschnitt kreuzförmig ausgebildete Zentrierstifte 27 (Fig. 2) an einer Griffschale 2 oder 3 vorgesehen, die jeweils in eine Zentrierbuchse 28 einsteckbar sind und die beiden Griffschalen 2, 3 zueinander in einer vorbestimmten Verbindungsposition halten.

Die Griffschalen 2, 3 sind mit einer Umhüllung aus Leder oder einer anderen Umhüllung versehen.

## Patentansprüche

1. Haltegriff (1) für ein Kraftfahrzeug, der aus zwei Griffschalen (2, 3) besteht, die miteinander verbindbar sind, einen innen liegenden Stützträger (4) aufweisen und der Haltegriff (1) insbesondere mit einem Mitteltunnel des Kraftfahrzeugs oder mit einer Fahrzeugstruktur verbindbar ist, wobei zwischen den beiden halbrundförmig ausgebildeten Griffschalen (2, 3) aus Kunststoff der Stützträger (4) angeordnet ist, welcher aus einem Profil besteht und an einem freien Ende ein aus den Griffschalen (2, 3) herausragendes erstes Verbindungselement (5) aufweist und an seinem diesem Verbindungselement (5) abgekehrten weiteren Ende ein weiteres Verbindungselement (6) zur Befestigung an der Fahrzeugstruktur (12) umfasst, **dadurch gekennzeichnet, dass** das aus den Griffschalen (2, 3) herausragende erste Verbindungselement (5) quergerichtete Befestigungsbohrungen (9, 10) für Befestigungsschrauben (11) zur Fahrzeugstruktur (12) aufweist und dass das weitere abgekehrte Ende ein angeformtes hülsenartige zweites Verbindungselement (6) mit einer längsgerichteten Gewindebohrung (14) für eine Befestigungsschraube (15) zur Fahrzeugstruktur (12) umfasst.

2. Haltegriff nach Anspruch 1, **dadurch gekennzeichnet, dass** der aus einem Doppel-T-Profil bestehende Stützträger (4) mit seinen Flanschen (18, 19) Verbindungskanten (16, 16a und 17, 17a) der Griffschalen (2, 3) zugerichtet ist und ein Steg (15) des Doppel-T-Profils in einer gemeinsamen Ebene (X-X) mit den Verbindungskanten verläuft und die Innenflächen der Griffschalen (2, 3) sich an Stirnkanten der Flansche (18, 19) des Profils abstützen.

3. Haltegriff nach den Ansprüchen 1 oder 2, **dadurch gekennzeichnet, dass** die Verbindungskanten (16, 16a und 17, 17a) der Griffschalen (2, 3) überlappend derart ausgeführt sind, dass die Verbindungskanten (16a, 17a) der einen Griffschale (3) eine Absetzung (20, 21) aufweisen, in die gegenüberstehende Verbindungskanten (16, 17) der weiteren Griffschale (2) angeordnet sind und die über ein Verbindungsverfahren miteinander verbundenen Griffschalen (2, 3) im Bereich der Verbindungskanten jeweils eine Vertiefung (22, 23) zur Aufnahme einer Naht von einer Umhüllung aufweisen.

4. Haltegriff nach den Ansprüchen 1, 2 oder 3, **dadurch gekennzeichnet, dass** an einer Innenfläche einer Griffschale (2, 3) mindestens ein Schweißdom (24) angeordnet ist, auf dem über eine Heiß-Nietung der Stützträger (4) festsetzbar ist.

5. Haltegriff nach einem der vorhergehenden Ansprüche, **dadurch gekennzeichnet, dass** an der Innenfläche einer Griffschale (2, 3) mindestens eine Zentrierbuchse (28) angeformt ist, in die ein Zentrierstift (27) der weiteren Griffschale zur Ausrichtung der beiden Griffschalen (2, 3) zueinander einsteckbar ist.

6. Haltegriff nach Anspruch 5, **dadurch gekennzeichnet, dass** der Zentrierstift (27) im Querschnitt eine Kreuzform aufweist.

7. Haltegriff nach einem der vorhergehenden Ansprüche, **dadurch gekennzeichnet, dass** das hülsenartige Verbindungselement (6) des Stützträgers (4) den Raum zwischen den beiden Griffschalen (2, 3) ausfüllend angeordnet ist und ein Einsatzteil mit einer Gewindebohrung (14) zwischen Stegen des Verbindungselements (6) gehalten ist.

8. Haltegriff nach einem der vorhergehenden Ansprüche, **dadurch gekennzeichnet, dass** das herausragende Verbindungselement (5) des Stützträgers (4) mindestens die zwei durchgehenden Bohrungen (9, 10) für Befestigungsschrauben aufweist, welche quer zum Haltegriff (1) in Einbauposition des Haltegriffs (1) verlaufen und das Verbindungselement (5) und die Schrauben über eine an die Griffschalen (2, 3) anschließende Abdeckkappe (8) verdeckt sind.

## Claims

1. Handgrip (1) for an automotive vehicle, the handgrip comprising two gripping shells (2, 3) which can be connected to each other and have an inner supporting carrier (4), and the handgrip (1) can be connected in particular to a central tunnel of the automotive vehicle or to a vehicle structure, wherein the supporting carrier (4) is arranged between the two plastic gripping shells (2, 3), which are of semicircular design, the supporting carrier being composed of a profile and, at one free end, having a first connecting element (5) which projects out of the gripping shells (2, 3) and, at its further end which faces away from said connecting element (5), comprising a further connecting element (6) for fastening to the vehicle structure (12), **characterized in that** the first connecting element (5) which projects out of the gripping shells (2, 3) has transversely directed fastening bores (9, 10) for fastening screws (11) for fastening it to the vehicle structure (12), and **in that** the further end which faces away comprises an integrally formed, sleeve-like, second connecting element (6) with a longitudinally directed threaded bore (14) for a fastening screw (15) for fastening it to the vehicle structure (12).

2. Handgrip according to Claim 1, **characterized in that** the flanges (18, 19) of the supporting carrier (4), which comprises an I-profile, point towards connecting edges (16, 16a and 17, 17a) of the gripping shells (2, 3), and a web (15) of the I-profile runs in a common plane (X-X) with the connecting edges, and the inner surfaces of the gripping shells (2, 3) are supported on front edges of the flanges (18, 19) of the profile.

3. Handgrip according to Claim 1 or 2, **characterized in that** the connecting edges (16, 16a and 17, 17a) of the gripping shells (2, 3) are designed to overlap such that the connecting edges (16a, 17a) of the one gripping shell (3) has an offset (20, 21) in which opposite connecting edges (16, 17) of the further gripping shell (2) are arranged, and the gripping shells (2, 3) which are connected to each other in the region of the connecting edges via a connecting method each have a depression (22, 23) for receiving a seam of a covering.

4. Handgrip according to Claims 1, 2 or 3, **characterized in that** at least one welding dome (24) is arranged on an inner surface of a gripping shell (2, 3), and the supporting carrier (4) can be fixed on it via hot riveting.

5. Handgrip according to one of the preceding claims, **characterized in that** at least one centring bush (28) is integrally formed on the inner surface of a gripping shell (2, 3), and a centring pin (27) of the further gripping shell can be inserted into said centring bush in order to align the two gripping shells (2, 3) with each other.

6. Handgrip according to Claim 5, **characterized in that** the centring pin (27) has a cross shape in cross section.

7. Handgrip according to one of the preceding claims, **characterized in that** the sleeve-like connecting element (6) of the supporting carrier (4) is arranged in a manner such that it fills the space between the two gripping shells (2, 3), and an insert with a threaded bore (14) is held between webs of the connecting element (6).

8. Handgrip according to one of the preceding claims, **characterized in that** the projecting connecting element (5) of the supporting carrier (4) has at least the two continuous bores (9, 10) for fastening screws, which bores run transversely with respect to the handgrip (1) in the fitted position of the handgrip (1), and the connecting element (5) and the screws are concealed via a covering cap (8) which adjoins the gripping shells (2, 3).

## Revendications

1. Poignée (1) pour un véhicule automobile, qui se compose de deux coquilles de poignée (2, 3) qui peuvent être assemblées l'une à l'autre, qui comportent une poutre de support (4) située à l'intérieur, et la poignée (1) peut être assemblée en particulier à un tunnel central du véhicule ou à une structure du véhicule, dans laquelle la poutre de support (4) est disposée entre les deux coquilles de poignée (2, 3) de forme semi-circulaire en matière synthétique, poutre qui se compose d'un profilé et qui présente à une extrémité libre un premier élément de liaison (5) sortant hors des coquilles de poignée (2, 3) et qui comporte à son autre extrémité, opposée à cet élément de liaison (5), un autre élément de liaison (6) pour la fixation à la structure du véhicule (12), **caractérisée en ce que** le premier élément de liaison (5) sortant des coquilles de poignée (2, 3) présente des alésages de fixation transversaux (9, 10) pour des vis (11) de fixation à la structure du véhicule (12), et **en ce que** l'autre extrémité opposée comporte un deuxième élément de liaison (6) façonné en forme de douille avec un alésage fileté longitudinal (14) pour une vis (15) de fixation à la structure du véhicule (12).

2. Poignée selon la revendication 1, **caractérisée en ce que** la poutre de support (4) composée d'un profilé en double T est disposée avec ses ailes (18, 19) vers les côtés de jonction (16, 16a et 17, 17a) des coquilles de poignée (2, 3) et une âme (15) du profilé en double T est située dans un plan (X-X) commun avec les côtés de jonction et les surfaces intérieures des coquilles de poignée (2, 3) s'appuient sur les côtés frontaux des ailes (18, 19) du profilé.

3. Poignée selon les revendications 1 ou 2, **caractérisée en ce que** les côtés de jonction (16, 16a et 17, 17a) des coquilles de poignée (2, 3) sont réalisés avec un recouvrement de telle manière que les côtés de jonction (16a, 17a) d'une première coquille de poignée (3) présentent un retrait (20, 21), dans lequel des côtés de jonction opposés (16, 17) de l'autre coquille de poignée (2) sont disposés et les coquilles de poignée (2, 3) assemblées l'une à l'autre par un procédé d'assemblage présentent, dans la région des côtés de jonction, chaque fois un creux (22, 23) destiné à recevoir une couture d'une gaine.

4. Poignée selon les revendications 1, 2 ou 3, **caractérisée en ce qu'**il se trouve, sur une surface intérieure d'une coquille de poignée (2, 3), au moins un mandrin soudé (24), sur lequel la poutre de support (4) peut être attachée par rivetage à chaud.

5. Poignée selon l'une quelconque des revendications précédentes, **caractérisée en ce qu'**il se trouve au moins une douille de centrage (28) formée sur la surface intérieure d'une coquille de poignée (2, 3), dans laquelle une broche de centrage (27) de l'autre coquille de poignée peut être engagée pour l'alignement des deux coquilles de poignée (2, 3) l'une par rapport à l'autre.

6. Poignée selon la revendication 5, **caractérisée en ce que** la broche de centrage (27) présente une section transversale en forme de croix.

7. Poignée selon l'une quelconque des revendications précédentes, **caractérisée en ce que** l'élément de liaison (6) en forme de douille de la poutre de support (4) remplit entièrement l'espace entre les deux coquilles de poignée (2, 3) et une pièce insérée avec un alésage fileté (14) est retenue entre des nervures de l'élément de liaison (6).

8. Poignée selon l'une quelconque des revendications précédentes, **caractérisée en ce que** l'élément de liaison sortant (5) de la poutre de support (4) présente au moins les deux alésages traversants (9, 10) pour des vis de fixation, qui sont transversales à la poignée (1) en position montée de la poignée (1), et l'élément de liaison (5) et les vis sont masqués par une coiffe de masquage (8) ajustée sur les coquilles de poignée (2, 3).
